# EUROPEAN PATENT SPECIFICATION

(11) **EP 3 541 041 B1**
(45) Date of publication and mention of the grant of the patent: **09.03.2022**
(21) Application number: 18305302.4
(22) Date of filing: 16.03.2018
(51) Int. Cl.: H04L 29/06, H04W 84/18, H04W 4/38, H04W 28/06

(54) **METHOD AND APPARATUS FOR PROCESSING MESSAGE DATA**
VERFAHREN UND VORRICHTUNG ZUR VERARBEITUNG VON NACHRICHTENDATEN
PROCÉDÉ ET APPAREIL DE TRAITEMENT DE DONNÉES DE MESSAGE

(43) Date of publication of application: 18.09.2019
(73) Proprietor: ACKLIO, 35510 Cesson-Sévigné (FR)
(72) Inventor: MINABURO, Ana, 35576 CESSON-SEVIGNE CEDEX (FR); PELOV, Mr. Alexander, 35576 CESSON-SEVIGNE CEDEX (FR)
(74) Representative: Marks & Clerk France

(56) References cited:
- US-A1- 2013 028 095
- US-A1- 2016 191 466
- KHALED Q. ABDELFADEEL ET AL: "LSCHC : Layered Static Context Header Compression for LPWANs", PROCEEDINGS OF THE 12TH WORKSHOP ON CHALLENGED NETWORKS , CHANTS '17, 20 October 2017 (2017-10-20), pages 13-18, XP055505241, New York, New York, USA DOI: 10.1145/3124087.3124092 ISBN: 978-1-4503-5144-7
- A Minaburo ET AL: "lpwan Working Group LPWAN Static Context Header Compression (SCHC) and fragmentation for IPv6 and UDP draft-ietf-lpwan-ipv6-static-context-hc-10 ", , 28 February 2018 (2018-02-28), XP055504019, Retrieved from the Internet: URL:https://tools.ietf.org/pdf/draft-ietf- lpwan-ipv6-static-context-hc-10.pdf [retrieved on 2018-09-04]
- 11: "Personal Stateful Firewall Administration Guide THE SPECIFICATIONS AND INFORMATION REGARDING THE PRODUCTS IN THIS MANUAL ARE SUBJECT TO CHANGE WITHOUT NOTICE. ALL STATEMENTS, INFORMATION, AND RECOMMENDATIONS IN THIS MANUAL ARE BELIEVED TO BE ACCURATE BUT ARE PRESENTED WITHOUT WARRANTY OF ANY KIND, E", , 14 January 2011 (2011-01-14), XP055181318, Retrieved from the Internet: URL:http://www.cisco.com/c/dam/en/us/td/do cs/wireless/asr_5000/11_0/OL-24220_Firewal l_Admin.pdf [retrieved on 2015-04-07]

## Description

### Field of the invention

The present invention relates generally to the processing of data messages, and in particular the compression of such data.

### Background of the invention

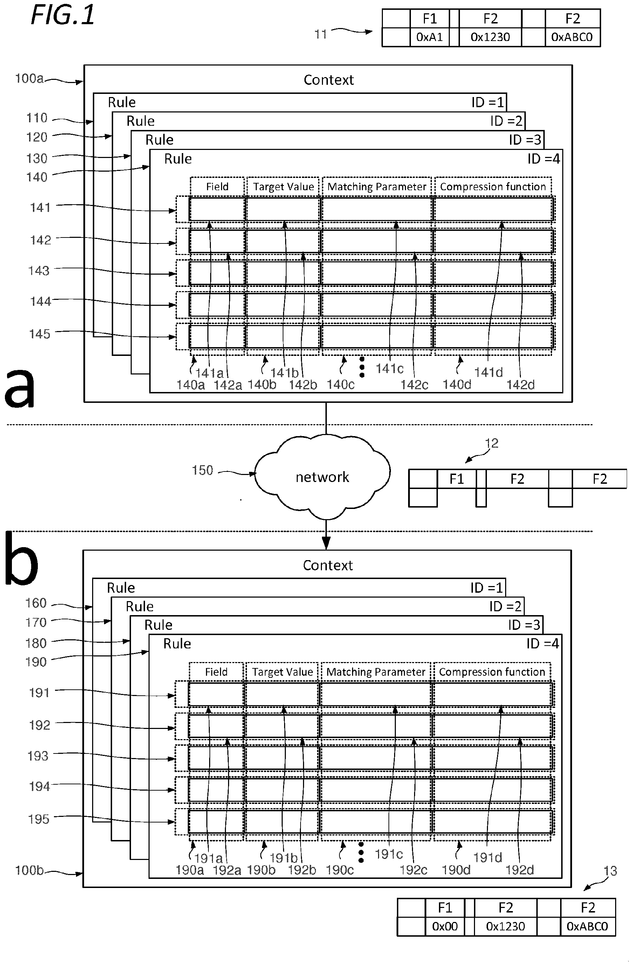

Figure 1 shows schematically aspects of a network header compression mechanism as known in the prior art.

Specifically, figure 1 shows elements of a mechanism for header compression for IPv6 networks, substantially as proposed in LPWAN Static Context Header Compression (SCHC) for IPv6 and UDP draft-ietf-lpwan-ipv6-static-context-hc-10 As shown, data are to be transmitted from a transmitting device A to a receiving device B via an IPv6 based LPWAN network 150. Due to limitations such as the power or bandwidth availability at the transmitting device, it may be desirable to reduce the total amount of data to be transmitted. In accordance with the mechanism of figure 1, a data packet comprising a number of defined fields for transmission is exposed to a set of Rules 110, 120, 130, 140, which together constitute a context 100a. Each Rule comprises a plurality of Field instruction lines. For example, the Rule 140 comprises Field instruction lines 141, 142, 143, 144, 145 etc. The Field Description lines have a common structure comprising four entries. Specifically, each Field Description line comprises a Field ID specifying one of the defined fields of the data packet, a Target Value, a Matching Operator and a Compression/decompression Action. Thus as shown, the Fields of Rule 141 can be seen as structured into four columns 140a, 140b, 140c, 140d. Accordingly, Field Description lines 141 has a Field ID 141a, a Target Value 141b, a Matching Operator 141c and a Compression/Decompression Action 141d. Similarly, Field Description lines 142 has a Field ID142a, a Target Value 142b, a Matching Operator 142c and a Compression/Decompression Action 142d.

In operation, a data packet processed at the transmitter side is compared successively to each Rule, and with each rule successively to each Field Description line of that Rule using a Matching Operator.

For each Field Description line it is determined whether the Target Value entry of the field referenced in the Field ID entry corresponds in a prescribed manner as defined in the Matching Operator entry of that Field Description line. In a case where referenced field corresponds to the Target Value in the prescribed manner for every fields in a respective rule, the Compression/Decompression Action of each field in the corresponding rule is applied.

The possible Matching operators include the operators "ignore" or "Equals".

By way of example, Rule 140 might comprise the three fields shown below.

| Figure reference | Field ID | Target Value | Matching Operator | Compression Function |
|---|---|---|---|---|
| 141 | F1 | 0x00 | Ignore | not-sent |
| 142 | F2 | 0x1230 | Equal | not-sent |
| 143 | F3 | 0xABC0 | Equal | not-sent |

On this basis, the first field in the data packet would be exposed first to Field instruction line 141 , since the method of comparison prescribed in the Matching operator entry for this field is "Ignore", this comparison is automatically satisfied. The method then proceeds to Field instruction line 142, for which the manner of comparison prescribed in the Matching operator entry is "Equal". Accordingly, the field F2 of the data packet must comprise the Target value "0x1230", as defined in the Target Value Field. The method then proceeds to Field instruction line 143, for which the manner of comparison prescribed in the Matching operator entry is "Equal". Accordingly, the field F3 of the data packet must comprise the Target value "0xABC0", as defined in the Target Value Field.

Assuming all three Fields in rule 140 are satisfied on this basis, Rule 140 is selected for application. On this basis, the compression instruction of each field in the rule 140 is applied to the data packet.

As shown above, the compression function for all three Field instruction lines of rule 141 is "not sent", indicating that each of the three fields in question F1, F2 and F3 is stripped from the packed to be transmitted.

As shown in figure 1 the compressed packet is then transmitted via the network 150 to the receiving side b, together with an identifier of the Rule 140 that has been applied, ID4.

As shown, a set of Rules 160, 170, 180, 190, corresponding to rules 110, 120, 130 140 as described above respectively together constitute a context 100b. The context 100b corresponds in structure and content to context 100a, so that each Rule comprises a plurality of Field instruction lines. For example, the Rule 190 comprises Field instruction lines 191, 192, 193, 194, 195 etc. The Field instruction lines have a common structure comprising four entries. Specifically, each Field instruction line comprises a Field Reference specifying one of the defined fields of the data packet, a Target Value, a Matching Operator and a Compression/decompression Action. Thus as shown, the Field instruction lines of Rule 191 can be seen as structured into four columns 190a, 190b, 190c, 190d. Accordingly, Field instruction line 191 has a Field Reference 191a, a Target Value 191b, a Matching Parameter 191c and a Compression function 191d. Similarly, Field instruction lines 192 has a Field Reference 192a, a Target Value 192b, a Matching Parameter 192c and a Compression function 192d.

In operation, the received data packet is processed in accordance with the rule specified by the received transmission, that is, Rule ID4, corresponding to Rule 190. Each Field instruction line in the specified rule is applied to the respective field in the prescribed manner.

With reference to a Rule 190 that is identical to rule 140 as presented above, as indicated by the unique rule ID, ID4, the Rule 190 might comprise the three fields shown below.

| Figure reference | Field Reference | Target Value | Matching Operator | Compression Function |
|---|---|---|---|---|
| 141 | F1 | 0x00 | Ignore | not-sent |
| 142 | F2 | 0x1230 | Equal | not-sent |
| 143 | F3 | 0xABC0 | Equal | not-sent |

On this basis, the first field F1 in the data packet would be filled with the value 0x00, the second field F2 in the data packet would be filled with the value 0x1230 and the third field F3 in the data packet would be filled with the value 0xABC0.

It may be observed on this basis that the resulting packet 13 is identical to the original packet 11, apart from the value of Field F1, where the original value 0xA1 has been replaced by the value 0x00, by the operation of the "ignore" Matching operator in field 141c. It will be appreciated that in certain cases it may be determined that the value of a particular field can safely default to a predetermined value in this way without interfering with overall system operation. The article entitled "LSCHC: Layered Static Context Header Compression form LPWANs" by Kaled Q. Abdelfadeel et al, published in CHANTS'17, October 2017,Session:Security and IOT, compares SCHC header compression with IPHC, and proposes Layered SCHC, based on a layered context. This article suggests the transmission of a "no compression" rule ID in commpressed messages where no rule matching a particular string is identified, so as to avoid an error condition due to the decompressor expecting a rule id in every case.

US2016191466 provides methods and systems for dynamically optimized rule-based security policy management. A request is received by a network security management device to add a new traffic flow policy rule to multiple existing policy rules managed by the network security management device. Dependencies of the new traffic flow policy rule on the existing policy rules are automatically determined. An updated set of policy rules is formed by incorporating the new traffic flow policy rule within the existing policy rules based on the dependencies. The updated set of policy rules is then optimized by grouping, reordering and/or deleting a sub-set of policy rules of the updated set of policy rules based on one or more of weights assigned to particular types of traffic, preference settings, priority settings, network traffic characteristics and usage statistics for each policy rule of the updated set of policy rules.

The document entitled "Personal Stateful Firewall Administration Guide, Version 11.0" Dated January 14, 2011, available at http://www.cisco.com/c/dam/en/us/td/docs/wore;ess/asr 5000/11 0/OL-24220 Firewall Admin.pdf" describes a Personal Stateful Firewall presenting an inline service feature that inspects subscriber traffic and performs IP session-based access control of individual subscriber sessions to protect the subscribers from malicious security attacks. The Personal Stateful Firewall supports stateless and stateful inspection and filtering based on the configuration.

In stateless inspection, the firewall inspects a packet to determine the 5-tuple-source and destination IP addresses and ports, and protocol-information contained in the packet. This static information is then compared against configurable rules to determine whether to allow or drop the packet. In stateless inspection the firewall examines each packet individually, it is unaware of the packets that have passed through before it, and has no way of knowing if any given packet is part of an existing connection, is trying to establish a new connection, or is a rogue packet.

In stateful inspection, the firewall not only inspects packets up through the application layer / layer 7 determining a packet's header information and data content, but also monitors and keeps track of the connection's state. For all active connections traversing the firewall, the state information, which may include IP addresses and ports involved, the sequence numbers and acknowledgement numbers of the packets traversing the connection, TCP packet flags, etc. is maintained in a state table. Filtering decisions are based not only on rules but also on the connection state established by prior packets on that connection. This enables to prevent a variety of DoS, DDoS, and other security violations. Once a connection is torn down, or is timed out, its entry in the state table is discarded. For more information see the Connection State and State Table in Personal Stateful Firewall section.

Mechanisms such as that described with reference to figure 1 provide a basis for reducing the data flow in networks, nevertheless as the number of devices using such communications systems grows, and the capacities of end devices are subject to ever stricter limitations in terms of power consumption, processing power and communications bandwidth, it is desirable to provide mechanisms for further optimizing such communications.

### Summary of the invention

In accordance with the present invention in a first aspect there is provided a method of processing a data message, wherein there are defined a one or more rules, each the rule comprising one or more field instruction lines, each field instruction line comprising a target value and a processing instruction. The method comprises the steps of parsing the data message, determining for a field instruction line whether a respective specified region of the data message corresponds to the target value in a respective prescribed manner, and in a case where the respective specified region corresponds to the target value in the respective prescribed manner for each field instruction line in a respective rule, applying the processing instruction of each field instruction in the corresponding rule with regard to the respective specified region, and in a case where no rule is found to correspond, performing a further step of performing a security operation.

In a development of the first aspect the target value is obtained from an external service

In a development of the first aspect the target value defined on the basis of information extracted from one or more data messages.

In a development of the first aspect one or more of the field instruction lines are security instruction lines, and wherein one or more of the security instruction lines specify a security operation to be executed in the case where the respective specified region corresponds to the target value in the respective prescribed manner for each field instruction line in a respective rule.

In a development of the first aspect the security operation comprises logging a security event.

In a development of the first aspect in a case where a predetermined threshold of security events logged in a predetermined period is exceeded, a further security operation is performed.

In a development of the first aspect the security operation comprises emitting a security alert message.

In a development of the first aspect the security operation comprises cancelling the transmission of some or all of the data packet.

In a development of the first aspect the security operation comprises modifying, adding or removing a rule

In a development of the first aspect the data packet is transmitted via a plurality of devices, and wherein the steps are repeated at each device

In a development of the first aspect the data packet is transmitted in accordance with telecommunications system defining a plurality of abstraction layers, and wherein the steps are repeated at each abstraction layer.

In accordance with the present invention in a second aspect there is provided a computer program comprising instructions adapted to implement the steps the first aspect.

In accordance with the present invention in a third aspect there is provided a data message processor, comprising storage storing one or more rules, each rule comprising one or more field instruction lines, each field instruction line comprising a target value and a processing instruction. The processor is adapted to parsing a data message, and to determine for a the field instruction line whether a respective specified region of the data message corresponds to the target value in a respective prescribed manner, and in a case where the respective specified region corresponds to the target value in the respective prescribed manner for each field instruction line in a respective rule, to apply the processing instruction of each field instruction in the corresponding rule with regard to the respective specified region, and in a case where no rule is found to correspond, to perform a security operation.

### Brief Description of the Drawings

The above and other advantages of the present invention will now be described with reference to the accompanying drawings, for illustration purposes only, in which:
- Figure 1: shows schematically aspects of a network header compression mechanism as known in the prior art;
- Figure 2: shows a method according to a first embodiment;
- Figure 3: presents schematically an environment in which certain embodiments may be implemented;
- Figure 4: presents an example of specification learning via state communications in accordance with an embodiment;
- Figure 5: shows a generic computing system suitable for implementation of embodiments of the invention; and
- Figure 6: shows a standalone sensor device adaptable to constitute an embodiment.

### Detailed description

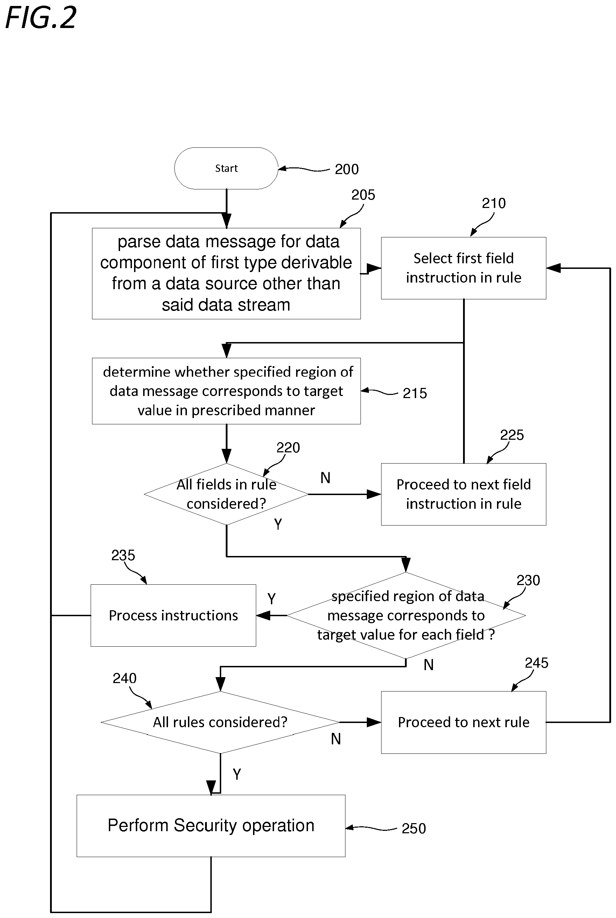

Figure 2 shows a method according to a first embodiment.

As shown in figure 2, there is provided a method of processing a data message. The message may be a packet, for example defined in accordance with a known packet transmission protocol such as IPv6 or IPv4. It will be appreciated that embodiments may be used in a very wide range of communications networks, including by way of non limiting example, IPv4 or IPv6, CoAP (Constrained Application Protocol), UDP (User Datagram Protocol), TCP (Transmission Control Protocol), ICMP (Internet Control Message Protocol), ICMPv6, CBOR (Concise Binary Object Representation), CoMI (CoAP Management Interface), LWM2M (Light Weight Machine to Machine), OneM2M, OCF (Open Connectivity Foundation), MQTT (Message Queuing Telemetry Transport), RoHC (Robust Header Compression), VJ , GHC (Generic Header Compression), DTLS (Datagram Transport Layer Security) or other features characteristic of any of the communications contexts mentioned above, non-formatted data messages where individual data fields are attributed to fixed bit or word positions within a message which may have a proprietary format, or otherwise. The message may equally constitute a burst type message, for example in a point to point communication. By way of the example, the message may comprise a communication with weather station reporting communications, cellular telephone signalling communications such as 3G PDU, Mobility Management, and the like, Bluetooth, Zigbee, ADS-B aircraft communications, remote industrial sensors such as flow control and status monitoring of pipelines, intrusion detection of remote installations, and so on.

In accordance with the embodiment of figure 2 there are defined a one or more rules, each rule comprising one or more field instruction lines, each said field instruction line comprising a target value and a processing instruction. As such, the embodiment has certain characteristics in common with the arrangement of figure 1, and in some variants may constitute a development of this approach.

As shown in figure 2, the method starts at step 205, at which a data message is parsed. The method then proceeds to step 210 at which the first field instruction in the rule under consideration is selected. At step 215 it is determined for the selected field instruction line of the rule under consideration whether a respective specified region of the data message corresponds to the target value of the selected field instruction line in a respective prescribed manner.

Determining whether the specified field corresponds to the target value in the manner defined by the matching operator of the field instruction line does not necessarily constitute determining whether the field is equal to the Target Value. The Matching Operator may be used to evaluate if the field value matches the Target Value. This may be expressed as: MO(Field_Value, Target_Value) -where MO returns TRUE or FALSE (match or no match). This representation is denoted as the Polish notation. The method next proceeds to step 220 at which it is determined whether all field instruction lines in the rule currently under consideration have been assessed. In a case where all field instruction lines in the rule currently under consideration have not been assessed the method proceeds to step 225 at which the next field instruction in the rule is selected, before reverting to step 210. In a case where all field instruction lines in the rule currently under consideration are determined to have been assessed at step 220 the method proceeds to step 230 at which it is determined whether the respective specified region corresponds to said target value in said respective prescribed manner for each field instruction line in a the rule under consideration for each field instruction line in that rule, the method proceeds to step 235 at which the processing instruction of each field instruction in the corresponding rule is applied with regard to the respective specified region before reverting to step 205 for a new message. If it is determined at step 230 that the respective specified region does not correspond to the target value in said respective prescribed manner for each field instruction line in the rule currently under consideration, the method proceeds to step 240 at which it is determined if all defined rules have been considered. If it is determined at step 240 that all rules have not been considered, the method proceeds to select the next rule for consideration at step 245. In a case where it is determined at step 240 that all rules have been considered, and therefore that no rule is found to correspond to the data message, the method proceeds to step 245 at which a security operation is performed, before reverting to step 205 for a new message.

In accordance with certain variants, to said data message, said marker being associated with a specification of a processing operation defining said derivation.

In certain embodiments, some or all field instruction lines may specify a processing operation defining the derivation of a data component from a data source other than a data stream associated with the data message, and performing the step of determining the specified region of the data message corresponds to target value in prescribed manner with reference to the results of that processing operation. In particular, the processing operation may comprise an instruction to retrieve the data component, or some precursor thereto, from a repository such as a static file or database. The processing operation may alternatively or additionally comprise an instruction to retrieve the data component, or some precursor thereto, from a process, which may be an external application, or a software operation defined in the specification itself, and executed on a suitable platform, in which case the executed software may constitute the data source. In either case, the data source is not the data stream associated with the data message, for example a data stream to which the data message belongs, or the data message itself. The data source may optionally exclude the specification, and/or a context to which the specification belongs. The processing operation may contribute to the definition of the respective specified region (e.g. as defined by the field ID), the Target Value, the prescribed manner in which the target value and the value in the specific region may be required to correspond (e.g. as defined by the matching operator), or the processing instruction to be performed in a case where the field instruction line is applied at step 235, or any combination or some or all of these. As such, the Field Identifier, target value, Matching Operator or Processing Instruction may be obtained from an external service

In embodiments for example as discussed hereafter, the modification of the data message may be performed with a view to compressing or enriching the data message. The marker may comprise a Rule ID, for example as described with respect to figure 1, or hereafter, in which case the specification of a processing operation defining the derivation of the substitute data may correspond to a rule, or an instruction line of a rule. This process does not imply a constraint on the nature of the marker - it could be an opaque set of bits (e.g. a label) or structured information (e.g. CBOR-, XML- or otherwise formatted data).

On this basis, in a compression mode the step of modifying the data message with the marker may comprise replacing the data component with the marker. By way of example, the Marker may comprise a Rule ID as discussed with reference to figure 1, where substitute data corresponding to the data component is derivable from a data source other than the data message in combination with knowledge of said characteristic.

Similarly, in an enriching mode the step of modifying the data message with the marker may comprise replacing the data component with the marker. By way of example, the Marker may comprise a Rule ID as discussed with reference to figure 1, where substitute data corresponding to the data component is derivable from a data source other than the data message in combination with knowledge of said characteristic.

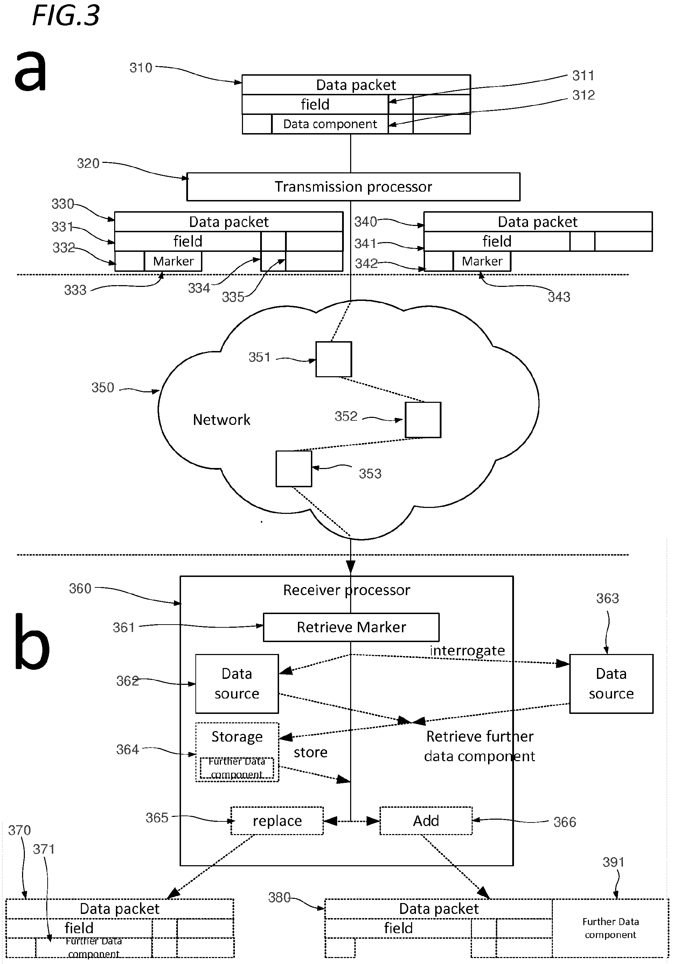

Figure 3 presents schematically an environment in which certain embodiments may be implemented.

As shown in figure 3, a data message 310 is processed for transmission at transmission processor 320. In accordance with the method of figure 2, a field 311 of the data message 310 is parsed, and a case where the respective specified region corresponds to said target value in said respective prescribed manner for each field instruction line in a respective rule, the processing instruction of each field instruction in the corresponding rule is applied with regard to the respective specified region. The transmission processor may then replace the data component 312 with a marker 333, 343 associated with the first data component type and the characteristic. As shown, the marker 333 may replace merely the data component in question, or alternatively a single marker 343 may replace data components belonging to a number of fields in the data message, for example as allowed by the approach described above with respect to figure 1. It will be appreciated that the term "replacing" should not be understood to require that the marker be placed in the same position in the data message as the data component, or that it should have the same length. Indeed the marker will typically be much shorter that the data component it replaces so as to achieve a compression effect. Indeed where the marker takes the form of a Rule ID along the lines of the approach described with reference to figure 1, it may typically be in the order of 1 byte, and may be as small as one bit. It will be appreciated that one or more markers may be used to replace data components belonging to the same field, or belonging to different respective fields, or spread across a plurality of respective fields. It will be appreciated that in certain cases the field or fields containing data components that are to be replaced by one or more markers may contain additional content that is not replaced by a marker, in which case this further content is included in the data message 330, 340 as a respective residual payload 332, 342.

The resulting data message 330 or 340 is then transmitted via the network 350 from the sender a to the receiver b, via a number of network relay servers 351, 352, 353.

Each of these network relay servers 351, 352, 353 may implement the steps of the method of figure 2, so that once again a field 311 of the data message 310 is parsed, and a case where the respective specified region corresponds to said target value in said respective prescribed manner for each field instruction line in a respective rule, the processing instruction of each field instruction in the corresponding rule is applied with regard to the respective specified region.

When the receiver b receives the data message 330 or 340, it is processed by a receiver processor 360 and the marker 333, 343 is extracted by functional unit 361. The receiver processor 360 may implement the steps of the method of figure 2, so that once again a field 311 of the data message 310 is parsed, and a case where the respective specified region corresponds to said target value in said respective prescribed manner for each field instruction line in a respective rule, the processing instruction of each field instruction in the corresponding rule is applied with regard to the respective specified region.

As such, the same steps as discussed with respect to figure 2 may be implemented at the transmitting device A, at the receiving device B and any number of intermediate devices 351, 352, 353. At each of these devices where a Rule is found to apply the message is processed in the defined manner, and generally forwarded to the next device. In a case where no said rule is found to correspond at any of these instantiations of the method of figure 2 a further step of performing a security operation is performed.

As such, the processing of contexts comprising one or more rules, each rule comprising one or more field instruction lines, each field instruction line comprising a target value and a processing instruction can on one hand provide functions such as header compression and decompression, e.g. at the transmission processor and reception processor respectively, but also in accordance with embodiments provide a means of detecting a security condition where no rule is found to match. Applying the approach at the sender or receiver or at intermediate points provides a means for identifying security conditions, and reacting appropriately at any point in the network. As such the data message may be transmitted via a plurality of devices, and the steps of the method of figure to may be repeated at some or all of these devices.

As such there is provided a data message processor, comprising storage storing one or more rules, each said rule comprising one or more field instruction lines, each said field instruction line comprising a target value and a processing instruction;
said processor adapted to parsing a data message, and to determine for a said field instruction line whether a respective specified region of said data message corresponds to said target value in a respective prescribed manner, and in a case where said respective specified region corresponds to said target value in said respective prescribed manner for each field instruction line in a respective said rule, to apply the processing instruction of each field instruction in said corresponding rule with regard to the respective specified region, and in a case where no said rule is found to correspond, to perform a security operation.

Accordingly, the security operation may comprise logging a security event. A predetermined threshold of security events logged in a predetermined period may be defined, and where this threshold is exceeded, a further security operation may be performed.

The security operation, or further security operation may comprise emitting a security alert message, for example by email, SMS or any other convenient channel.

The security operation, or further security operation may comprise cancelling the transmission of some or all of the data message.

The security operation, or further security operation may comprise modifying, adding or removing a rule.

The data packet may be transmitted in accordance with telecommunications system defining a plurality of abstraction layers, and wherein said steps are repeated at each abstraction layer.

In the arrangement of figure 1, it is presumed that the Specifications are identical in the receiver and transmitter, and by the same token that they are identical regardless of the characteristics of where they are implemented, for example in an end device on one hand or a server on the other. For example, for compression the IP address might be compressed regarding values learned either through DHCP (global) or SLAAC (link local), so that the marker will indicate if is a global or link local address. At the receiver side however it may be sufficient to decompress the address with a generic vale knowing the nature of the address where of the real value of the address. In accordance with certain embodiments, alternatives may be envisaged, for example as follows:
- Specifications defining a processing operation may be defined in which certain elements present alternatives, for application depending on the situation- for example, different target values, matching operators or processing instructions for received messages as opposed to transmitted messages, etc.
- The transmission processor or receiver processor may adapted to process Specifications defining a processing operation in a manner corresponding to the situation of the device in which it operates. For example, where a specification calls for a DHCP operation, in the case of a transmission from the device itself the transmission processor may be programmed to omit this step and simply insert a predefined value for the devices IP address.

On this basis, embodiments may be seen as association of a state with a given device, data flow, message, or generally the compressor/decompressor. A specific example would be the notion that a device may have the same IPv6 address during it's association to a particular network, the management application on this device will have the same UDP port for the entire lifespan of the device, a specific management session (which would reconfigure the period of device sleeping) may have a CoAP Token ID valid for the duration of the management session, the compressor/decompressor may have a specific CDA function implemented or absent, etc. On this basis, for example, if the Target Value entry implements a learning operation as described in more detail below, the learning must be stored somewhere. This may be on an external service (e.g. pushing it via HTTPS or storing it in a Database), or otherwise, but in any case essentially constitutes the keeping of a state. The same thing goes for any function that may be changed, discovered, learned, or used internally. There may be a function keeping the number of messages that have passed through the compressor. Or, there may be the FEC function that could be storing specific messages for recovery. Or, the keys of encryption, or tunnel establishment, or signature. Once communications are seen to have a stately aspect, a signalling mechanism allowing the two devices in communication to exchange data relative to their operation or to a particular state becomes meaningful. This could be then used for conveying values from the functions, which might need to be configured when the functions are executed. Such a state may retained on a per compressor/decompressor basis, per data flow, per device, per specification, per context, per function, or created dynamically. The state may be kept locally, remotely (e.g. via SSH, DNS, DHCP, HTTPS, MQTT, ODBC), or both. The context may then be seen as a static description, which has indications on how to interact with the state. Definition of Processing operation.

In certain embodiments a Marker or Rule ID may convey state information for the Compressor/Decompressor in band. For example, a Field with a function may have a Structured Variable Length Marker (SVLM). This SVLM may have a structure, e.g. expressed in CBOR, as a TLV or other. This may spit the Marker in two parts - "Marker" and "Additional information". The "Additional information" may carry information such as "New Target Value" for the Target Value. In the example of DHCP() server below, the Network may perform a DHCP to determine the IP address, then send the obtained value in a SLVM to the Device.

This could then also be used to initialise the configuration of a device through a single specification defining a processing operation allocated for this use, e.g. a specification defining a processing operation which contains all functions that need a value. The Specifications defining a processing operation itself will not generate any packets or operations on the device other than the setting up of the state associated with these functions.

An example of this could be asking the user to define some values, e.g. Source IP, Destination IP, UDP Destination on the end-device. This could be expressed for example with the definition of a function:
UserDefined()

The device can then have a CONFIG SPECIFICATION, with RULE_ID == 100, which is

| Field Reference | Target Value | Matching Operator | Processing Instruction |
|---|---|---|---|
| Config Protocol.Any | UserDefined('FirstIPv6Add') | ignore | sent |
| Config Protocol.Any | UserDefined('SecondIPv6Add') | ignore | sent |
| Config Protocol.Any | UserDefined('FirstUDPDest) | ignore | sent |

Here, the variables "FirstIPv6Add", "SecondIPv6Add" and "FirstUDPDest" make reference to part of the local state on the end-point. This could then be referenced by functions in other specifications defining a processing operation, e.g. to act as TargetValue. The naming is user-defined, and can have logic such as "All.IPv6.source" or "RuleID.5.IPv6.source" for example.

This specification defining a processing operation will be matched only when a configuration needs to be sent, and can use the SVLM. (alternatively, there could be a Management protocol that could perform this configuration on top of CoAP or other means not understood directly by the transmission processor/reception processor. The SVLM provides a way to synchronize the states of the two communicating ends in band.

The "Additional Information" may also include indication that the sender does not have the field in its state. This indicates to the receiver that they need to send it whenever possible. For example, a device may see the DHCP() function in the context, but may NOT be capable of executing directly the DHCP(). Upon compression, it would indicate in the "Additional information" part of the SVLM "Missing local state".

While the method of figure 2 presents a generally binary approach to processing data messages, where on one hand a message is considered to be valid and processed in the same way as all valid message, and on the other hand where no rule is found a security operation is performed. In certain embodiments, it may be envisaged that certain rules may comprise a number of rules which are provided not for the purpose of compression/decompression and the like, but specifically to detect security or error conditions.

On this basis, while the basic approach of performing a security operation may be relied on to capture unforeseen security or error conditions, Rules may be provided for predictable error conditions.

Such rules may comprise field instruction lines as described above, for example for compression and decompression operations, and additional security instruction lines, which are provided for detecting and characterizing error and security conditions. Where this approach is taken, there may exist a family of Rules with identical field instruction lines, but differing by their security instruction lines.

On this basis, one or more of said field instruction lines may be security instruction lines, wherein one or more of said security instruction lines specify a security operation for execution in said case where the respective specified region corresponds to the target value in the respective prescribed manner for each field instruction line in a respective said rule.

A basic approach along the lines of figure 3 may be extended in a number of ways to increase its power and sophistication.

The general approach of testing each rule, and then applying each Field instruction line in the rule means that operations can be included in the rule written in such a way that they have no effect on the testing (they are always true) for example by setting the Matching Operator to Ignore, but then including particular operations for the further processing of the data message. A number of examples presented below make use of this approach.

In some cases, it may be presumed that the Field instruction lines of the selected rule are applied in the order that they appear in the rule, and that the output data message is constructed from end to end in the same sequence as the order of Field instruction lines in the Rule being applied. By this means, the output data message can be structured by properly defining the sequence of Field instruction lines, and the Field ID number can in some cases be used for other purposes. A number of examples presented below make use of this approach.

The Processing instruction may comprise a Compression and/or Decompression action as discussed with respect to figure 1. As well as performing a variety of additional operations with the Processing instruction, we can also define functions that provide a zero-length output (e.g. output nothing) and only focus on the Action. The further data component retrieved in accordance with the method of figure 2 may then be used in a variety of manners.

In some cases, the further data component may be used to populate a decompressed data message by filling empty sections of the data message with the retrieved information. On this basis, the operation of the methods of figure 2 and 3 taken together constitute an end to end compression/decompression operation. As such the method may comprise the further step of replacing the data component with the further data component.

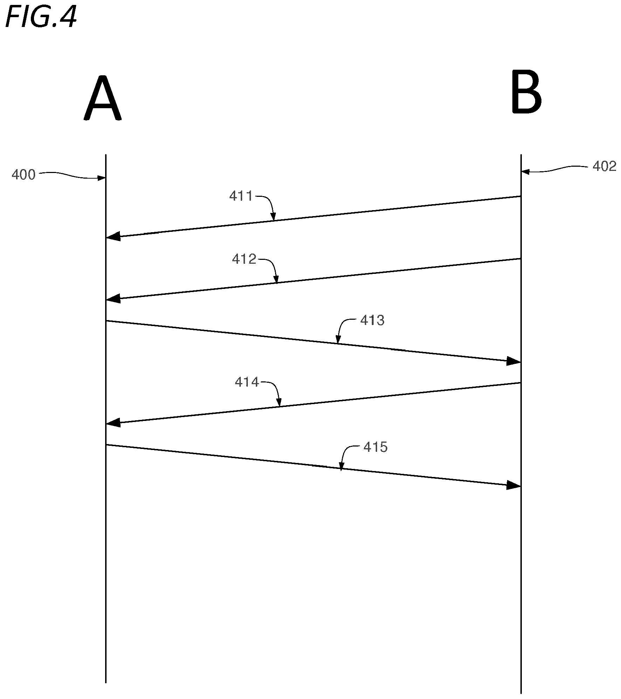

Figure 4 presents an example of specification learning via state communications in accordance with an embodiment. As shown, a series of communications 411, 412, 413, 414, 415 occur between a first device A 400 and a second device B 401. At the beginning the learning phase is not done. The device A 400 receives messages 411, 412 from Device B 401 compressed and then decompressed in accordance with a First specification. Then device A 400 sends a message 413 also compressed and then decompressed in accordance with a First specification. This message 413 contains some learning information. When the reception processor of device B receives this, it can learn parameters by means of which it may then compile a new specification. Device B 401 then uses the new specification to signal that a higher compression rate can be achieved in message 414. In this example the residue can be the same as the rule 1 (no learning phase in downlink). When the device receives the new specification, it can use a more optimized specification with just residue.

If Device B 401 reboots then it may revert to the initial specification and then the device A 400 will have to resend the learning information. If the device A 400 changes its learning information it can also revert to Rule 1 again.

In accordance with certain optional variants, the further data component may be subjected to further processing in the receiver processor or the transmission processor.

In accordance with certain optional variants, the further data component 371 may take the place of the original data component 312 in a reconstituted, or decompressed Data message 370, for example through a replace functional unit 365. In accordance with certain optional variants, the further data component 391 may be added e.g. by an "add" functional unit 366 to the data message as a further field not belonging to the original, or reconstituted data message 380.

In certain embodiments, on the transmission side, the method may additionally comprise processing a data message having a characteristic for transmission, the method comprising the steps of parsing a field of said data message for a data component of a first type, where the data component of said first type is derivable from a data source other than a data stream associated with said data message in combination with knowledge of said characteristic, adding a marker to said data message, said marker being associated with a specification of a processing operation defining said derivation.

The step of adding a marker associated with the first data component type and the characteristic to the data message may comprises replacing the data component with said marker.

In certain embodiments, on the reception side, the method may additionally comprise a method of processing a received data message having a known characteristic, the method comprising the steps of extracting a marker associated with a first data component type and the characteristic from the data message, and deriving a further data component by means of a processing operation with respect to a data source other than a data stream associated with the data message, where said processing operation is defined in a specification associated with said marker The method may comprise the further step of reconstituting the data component with said further data component.

In some cases, security instruction lines may be used to enrich a data message by adding complementary data in the data message, in addition to the original data message. In some cases, the method may comprise the further steps of storing the further data component, and in a further iteration of the step of parsing a region of a further data message for a marker associated with a first data component type and said characteristic, retrieving said stored substitute data instead of repeating said step of interrogating a data source associated with said marker on the basis of said characteristic.

It will be appreciated the various use cases mentioned above may be combined. For example, the further data may be both added to the data stream, and stored for future iterations, it may be used to decompress the data message, and stored for future iterations, or any other combination.

It will be appreciated that in such a context, the retrieval and as the case may be the use of the further data component may be performed at various different points in the process. For example, the data source may be interrogated in the context of the specification of the field, the definition or resolution of the processing instruction, the definition of the manner in which a particular target value is required to correspond to the target value, the definition of the target value, and so on. In the following sections, some of these possibilities are explored in further detail.

Accordingly, in certain embodiments a header compression context defines one or more rules, each rule comprising one or more field instruction lines, each field instruction line comprising a target value and a processing instruction; and a matching operator indicating the manner in which the content a respective specified region of a data message must correspond to the target value. Where no matching rule can be found on this basis, a security operation such as the issuing of an alert or blocking transmission or processing of the message is carried out.

Some CDA function may lead to a local process of the message and overpass the compression process.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 to 4. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

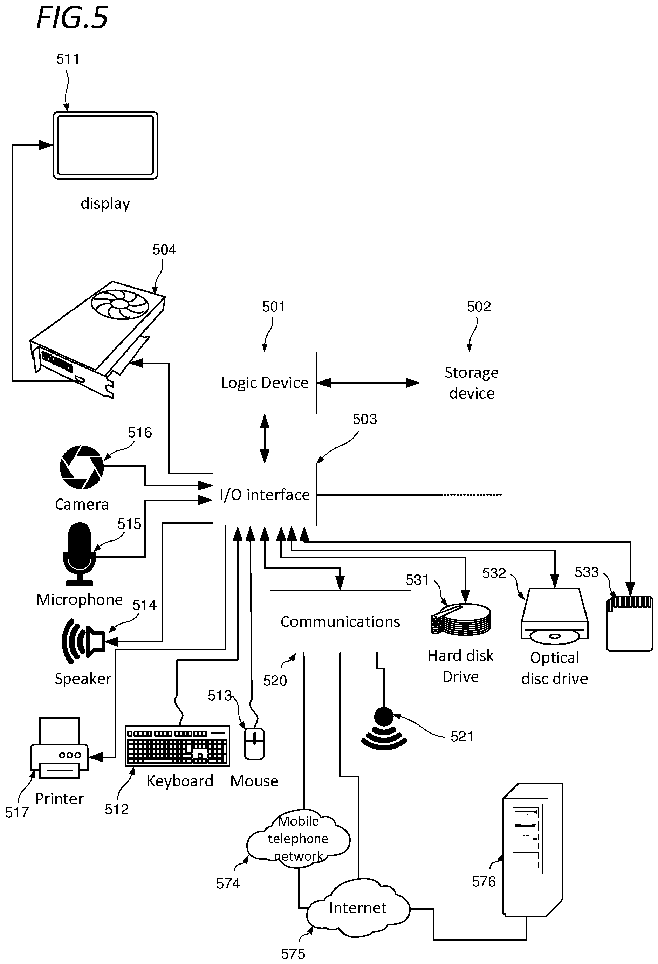

Figure 5 shows a generic computing system suitable for implementation of embodiments of the invention.

A shown in figure 5, a system includes a logic device 501 and a storage device 502. The system may optionally include a display interface 504 and display 511, input/output subsystem 503, communication subsystem 520, and/or other components not shown.

Logic device 501 includes one or more physical devices configured to execute instructions. For example, the logic device 501 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 501 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 501 optionally may be distributed among two or more separate devices, which may be remotely located and/or configured for coordinated processing. Aspects of the logic device 1001 may be virtualized and executed by remotely accessible, networked computing devices configured in a cloud-computing configuration.

Storage device 502 includes one or more physical devices configured to hold instructions executable by the logic device to implement the methods and processes described herein. When such methods and processes are implemented, the state of storage 502 device may be transformed-e.g., to hold different data.

Storage device 502 may include removable and/or built-in devices. Storage device may be locally or remotely stored (in a cloud for instance). Storage device 502 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices. In certain arrangements, the system may comprise an interface 503 adapted to support communications between the logic device 501 and further system components. For example, additional system components may comprise removable and/or built-in extended storage devices. Extended storage devices may comprise one or more types of storage device including optical memory 532 (e.g., CD, DVD, HD-DVD, Blu-Ray Disc, etc.), semiconductor memory 533 (e.g., RAM, EPROM, EEPROM, FLASH etc.), and/or magnetic memory 531 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 501 and storage device 502 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 502. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 5 may be used to implement embodiments of the invention.

For example a program implementing the steps described with respect to figures 2 to 5, or the algorithms presented above may be stored in storage device 502 and executed by logic device 501. The data message and/or data component may be received and/or transmitted via the communications interface 520, and in particular via radio network 574 or the internet 575. The Context or individual specifications may be received and/or transmitted via the communications interface 520, and in particular via radio network 574 or the internet 575. The data message, and/or data component may be buffered or otherwise stored in storage device 502, 531, 532, 533. The Context or individual specifications may be stored in storage device 502, 531, 532, 533. The data message, and/or data component may be User. The functions of any or all of the units 320, 370, or any or all of their respective sub units, may similarly be implemented by a program performing the required functions, in communication with additional dedicated hardware units as necessary. Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 511 may be used to present a visual representation of data held by a storage device. This visual representation may take the form of a graphical user interface (GUI). As the herein described methods and processes change the data held by the storage device 502, and thus transform the state of the storage device 502, the state of display subsystem 511 may likewise be transformed to visually represent changes in the underlying data. Display subsystem 511 may include one or more display devices utilizing virtually any type of technology for example as discussed above. Such display devices may be combined with logic device and/or storage device in a shared enclosure, or such display devices may be peripheral display devices. An audio output such as speaker 514 may also be provided.

When included, input subsystem may comprise or interface with one or more user-input devices such as a keyboard 512, mouse 513, touch screen 511, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone 515 for speech and/or voice recognition; an infrared, colour, stereoscopic, and/or depth camera 516 for machine vision and/or gesture recognition; a head tracker, eye tracker, accelerometer, and/or gyroscope for motion detection and/or intent recognition; as well as electric-field sensing componentry for assessing brain activity. The input/output interface 503 may similarly interface with a loudspeaker 514, vibromotor or any other transducer device as may occur to the skilled person. For example, the system may interface with a printer 517.

When included, communication subsystem 520 may be configured to communicatively couple computing system with one or more other computing devices. For example, communication module of communicatively couple computing device to remote service hosted for example on a remote server 576 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 574, or a wired or wireless local- or wide-area network. In some embodiments, the communication subsystem may allow computing system to send and/or receive messages to and/or from other devices via a network such as Internet 575. The communications subsystem may additionally support short range inductive communications with passive or active devices (NFC, RFID, UHF, etc). In certain variants of the embodiments described above, the traffic data may be received via the radio network 574 or Internet 575.

The system of figure 5 is intended to reflect a broad range of different types of information handling system. It will be appreciated that many of the subsystems and features described with respect to figure 5 are not required for implementation of the invention, but are included to reflect possible systems in accordance with the present invention. It will be appreciated that system architectures vary widely, and the relationship between the different sub-systems of figure 5 is merely schematic, and is likely to vary in terms of layout and the distribution of roles in systems. It will be appreciated that, in practice, systems are likely to incorporate different subsets of the various features and subsystems described with respect to figure 5.

Examples of devices comprising at least some elements of the system described with reference to figure 5 and suitable for implementing embodiments of the invention include cellular telephone handsets including smart phones, and vehicle navigation systems, distributed sensors, smart domestic appliances, connected industrial infrastructure equipment Smart city implementations or components, smart energy consumption implementations or components, finding articles or persons, medical, emergency services, agriculture, wearable sensors for humans and other species and so on.

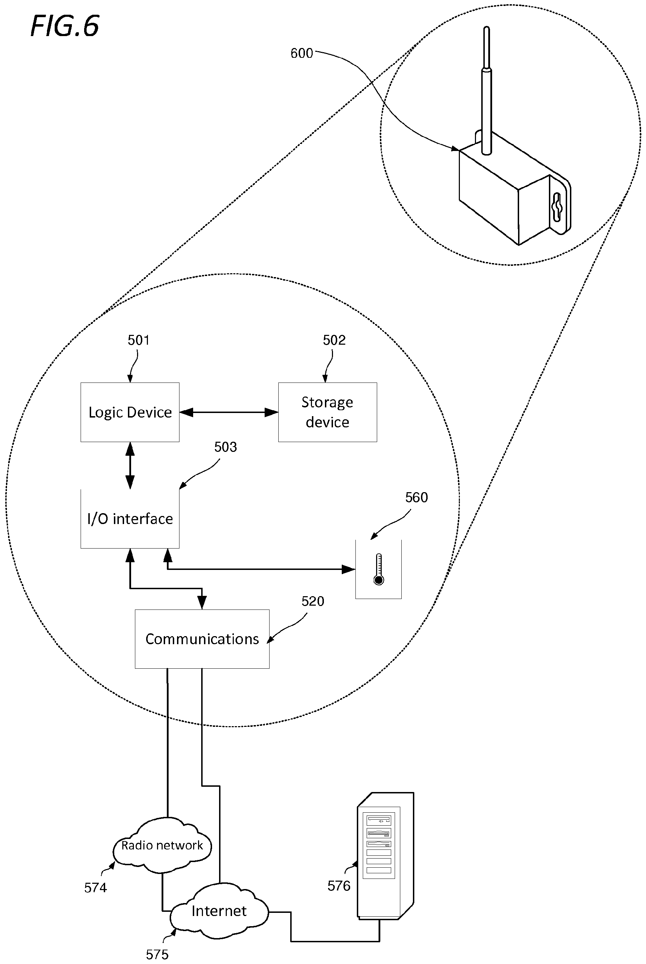

Figure 6 shows a standalone sensor device adaptable to constitute an embodiment. The standalone sensor device 600 of figure 6 may represent a typical "Internet of Things" component. Such devices are often subject to significant constraints in terms of communications bandwidth, power consumption, processing and memory capacity, and as such may benefit from many of the mechanisms presented in the foregoing discussion. As shown in figure 6, the standalone sensor device incorporates elements 501, 502, 503, 520, and sensor device 560. It is in communication with the radio network 574 and a server 576 via the network 575. Alternative communication mechanisms such as a dedicated network or Wi-Fi may also be used.

As shown the sensor device is a temperature sensor, however it will be appreciated that it might equally embody any other type of sensor, or other transducer, or a plurality of transducers as appropriate to the role of the device.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of performing header compression/decompression on a data message (11; 12), wherein there are defined a one or more rules (110, 120, 130, 140; 160, 170, 180, 190), each said rule comprising one or more field instruction lines (141, 142, 143, 144, 145; 191, 192, 193, 194, 195), each said field instruction line comprising a target value (141b, 142b; 191b, 192b) and a processing instruction defining a compression/decompression operation (141d, 142d;191d, 192d);
said method comprising the steps of parsing said data message, determining for a said field instruction line whether a respective specified region of said data message corresponds to said target value in a respective prescribed manner, and in a case where said respective specified region corresponds to said target value in said respective prescribed manner for each field instruction line in a respective said rule, applying the processing instruction of each field instruction in said corresponding rule with regard to the respective specified region, said method being **characterized in that** in a case where no said rule is found to correspond, performing a further step of performing a security operation comprising one or more of emitting a security alert message,
cancelling the transmission of some or all of the data packet and
modifying, adding or removing a rule

2. The method of claim 1 wherein said target value is obtained from an external service

3. The method of any preceding claim wherein said target value defined on the basis of information extracted from one or more said data messages.

4. The method of any preceding claim wherein said security operation further comprises logging a security event.

5. The method of claim 4 wherein in a case where a predetermined threshold of security events logged in a predetermined period is exceeded, a further security operation is performed.

6. The method of any preceding claim wherein said data packet is transmitted via a plurality of devices, and wherein said steps are repeated at each said device

7. The method of any preceding claim wherein said data packet is transmitted in accordance with telecommunications system defining a plurality of abstraction layers, and wherein said steps are repeated at each abstraction layer.

8. A computer program comprising instructions adapted to implement the steps of any of claims 1 to 7.

9. A header compression/decompression processor, comprising storage storing one or more rules(110, 120, 130, 140; 160, 170, 180, 190), each said rule comprising one or more field instruction lines (141, 142, 143, 144, 145; 191, 192, 193, 194, 195), each said field instruction line comprising a target value (141b, 142b; 191b, 192b) and a processing instruction defining a compression/decompression operation (141d, 142d;191d, 192d);
said processor adapted to parsing a data message, and to determine for a said field instruction line whether a respective specified region of said data message corresponds to said target value in a respective prescribed manner, and in a case where said respective specified region corresponds to said target value in said respective prescribed manner for each field instruction line in a respective said rule, to apply the processing instruction of each field instruction in said corresponding rule with regard to the respective specified region, said processor being **characterized in that** in a case where no said rule is found to correspond, it is further adapted to performing one or more of
emitting a security alert message,
cancelling the transmission of some or all of the data packet and
modifying, adding or removing a rule

## Patentansprüche

1. Verfahren zum Ausführen einer Header-Kompression/Dekompression auf einer Datennachricht (11; 12), wobei eine oder mehrere Regeln (110, 120, 130, 140; 160, 170, 180, 190) definiert sind, wobei jede Regel eine oder mehrere Feldanweisungslinien (141, 142, 143, 144, 145; 191, 192, 193, 194, 195) umfasst, wobei jede Feldanweisungslinie einen Zielwert (141b, 142b; 191b, 192b) und eine Verarbeitungsanweisung umfasst, welche eine Kompression/Dekompressionsoperation (141d, 142d; 191d, 192d) definiert;
wobei das Verfahren die Schritte des Parsens der Datennachricht, des Bestimmens für eine Feldanweisungslinie, ob ein entsprechender spezifizierter Bereich der Datennachricht dem Zielwert in einer entsprechenden vorgeschriebenen Weise entspricht, und falls der entsprechende spezifizierte Bereich dem Zielwert in der entsprechenden vorgeschriebenen Weise für jede Feldanweisungslinie in einer entsprechenden Regel entspricht, des Anwendens der Verarbeitungsanweisung jeder Feldanweisung in der entsprechenden Regel in Bezug auf den entsprechenden spezifizierten Bereich, wobei das Verfahren **dadurch gekennzeichnet ist, dass**, falls keine entsprechende Regel gefunden wird, ein weiterer Schritt des Ausführens einer Sicherheitsoperation ausgeführt wird, umfassend das Emittieren einer Sicherheitswarnnachricht, und/oder das Löschen der Übertragung einiger oder aller Datenpakete und/oder das Modifizieren, Hinzufügen oder Entfernen einer Regel.

2. Verfahren nach Anspruch 1, wobei der Zielwert von einem externen Dienst erhalten wird.

3. Verfahren nach einem der vorhergehenden Ansprüche, wobei der Zielwert auf der Basis von Informationen definiert ist, welche aus einer oder mehreren der Datennachrichten extrahiert werden.

4. Verfahren nach einem der vorhergehenden Ansprüche wobei die Sicherheitsoperation ferner das Protokollieren eines Sicherheitsereignisses umfasst.

5. Verfahren nach Anspruch 4, wobei, falls eine vorbestimmte Schwelle von Sicherheitsereignissen, die in einem vorbestimmten Zeitraum protokolliert werden, überschritten wird, eine weitere Sicherheitsoperation ausgeführt wird.

6. Verfahren nach einem der vorhergehenden Ansprüche, wobei das Datenpaket über eine Mehrzahl von Vorrichtungen übertragen wird und wobei die Schritte an jeder Vorrichtung wiederholt werden.

7. Verfahren nach einem der vorhergehenden Ansprüche, wobei das Datenpaket gemäß eines Telekommunikationssystems übertragen wird, welches eine Mehrzahl von Abstraktionsschichten definiert und wobei die Schritte für jede Abstraktionsschicht wiederholt werden.

8. Computerprogramm, umfassend Anweisungen, welche zum Implementieren der Schritte nach einem der Ansprüche 1 bis 7 angepasst ist.

9. Header-Kompression/Dekompressions-Prozessor, umfassend einen Speicher, der eine oder mehrere Regeln (110, 120, 130, 140; 160, 170, 180, 190) speichert, wobei jede Regel eine oder mehrere Feldanweisungslinien (141, 142, 143, 144, 145; 191, 192, 193, 194, 195) umfasst, wobei jede Feldanweisungslinie einen Zielwert (141b, 142b; 191b, 192b) und eine Verarbeitungsanweisung umfasst, welche eine Kompression/Dekompressionsoperation (141d, 142d; 191d, 192d) definiert;
wobei der Prozessor zum Parsen einer Datennachricht und zum Bestimmen, für eine Feldanweisungslinie, ob ein entsprechender spezifizierter Bereich der Datennachricht dem Zielwert in einer entsprechenden vorgeschriebenen Weise entspricht, und falls der entsprechende spezifizierte Bereich dem Zielwert in der entsprechenden vorgeschriebenen Weise für jede Feldanweisungslinie in einer entsprechenden Regel entspricht, zum Anwenden der Verarbeitungsanweisung jeder Feldanweisung in der entsprechenden Regel in Bezug auf den entsprechenden spezifizierten Bereich angepasst ist, wobei der Prozessor **dadurch gekennzeichnet ist, dass**, falls keine entsprechende Regel gefunden wird, dieser ferner zum Ausführen einer Sicherheitsoperation angepasst ist, umfassend das Emittieren einer Sicherheitswarnnachricht, und/oder das Löschen der Übertragung einiger oder aller Datenpakete und/oder das Modifizieren, Hinzufügen oder Entfernen einer Regel.

## Revendications

1. Procédé de réalisation d'une compression/décompression d'en-tête sur un message de données (11 ; 12), dans lequel sont définies une ou plusieurs règles (110, 120, 130, 140 ; 160, 170, 180, 190), chaque dite règle comprenant une ou plusieurs lignes d'instruction de champ (141, 142, 143, 144, 145 ; 191, 192, 193, 194, 195), chaque dite ligne d'instruction de champ comprenant une valeur cible (141b, 142b ; 191b, 192b) et une instruction de traitement qui définit une opération de compression/décompression (141d, 142d ; 191d, 192d) ;
ledit procédé comprenant les étapes qui consistent à réaliser l'analyse syntaxique dudit message de données, à déterminer, pour une dite ligne d'instruction de champ, si une région spécifiée respective dudit message de données correspond à ladite valeur cible selon une manière prescrite respective et dans le cas dans lequel ladite région spécifiée respective correspond à ladite valeur cible selon ladite manière prescrite respective pour chaque ligne d'instruction de champ dans une dite règle respective, à appliquer l'instruction de traitement de chaque instruction de champ dans ladite règle correspondante en ce qui concerne la région spécifiée respective, ledit procédé étant **caractérisé par**, dans le cas dans lequel aucune dite règle n'est trouvée en correspondance, la réalisation d'une étape supplémentaire qui consiste à réaliser une opération de sécurité qui comprend une ou plusieurs actions qui sont constituées par :
l'émission d'un message d'alerte de sécurité ;
l'annulation de la transmission d'une partie ou de tous les paquets de données; et
la modification, l'ajout ou la suppression d'une règle.

2. Procédé selon la revendication 1, dans lequel ladite valeur cible est obtenue à partir d'un service externe.

3. Procédé selon l'une quelconque des revendications précédentes, dans lequel ladite valeur cible est définie sur la base d'une information qui est extraite à partir d'un ou de plusieurs desdits messages de données.

4. Procédé selon l'une quelconque des revendications précédentes, dans lequel ladite opération de sécurité comprend en outre l'archivage par journalisation d'un événement de sécurité.

5. Procédé selon la revendication 4, dans lequel, dans le cas dans lequel un seuil prédéterminé d'événements de sécurité qui sont archivés par journalisation dans une période prédéterminée est excédé, une opération de sécurité supplémentaire est réalisée.

6. Procédé selon l'une quelconque des revendications précédentes, dans lequel ledit paquet de données est transmis via une pluralité de dispositifs, et dans lequel lesdites étapes sont répétées au niveau de chaque dit dispositif.

7. Procédé selon l'une quelconque des revendications précédentes, dans lequel ledit paquet de données est transmis conformément à un système de télécommunication qui définit une pluralité de couches d'abstraction, et dans lequel lesdites étapes sont répétées au niveau de chaque couche d'abstraction.

8. Programme informatique comprenant des instructions qui sont adaptées pour mettre en œuvre les étapes selon l'une quelconque des revendications 1 à 7.

9. Processeur de compression/décompression d'en-tête, comprenant un moyen de stockage qui stocke une ou plusieurs règles (110, 120, 130, 140 ; 160, 170, 180, 190), chaque dite règle comprenant une ou plusieurs lignes d'instruction de champ (141, 142, 143, 144, 145 ; 191, 192, 193, 194, 195), chaque dite ligne d'instruction de champ comprenant une valeur cible (141b, 142b ; 191b, 192b) et une instruction de traitement qui définit une opération de compression/décompression (141d, 142d ; 191d, 192d) ;
ledit processeur étant adapté pour réaliser l'analyse syntaxique d'un message de données et pour déterminer, pour une dite ligne d'instruction de champ, si une région spécifiée respective dudit message de données correspond à ladite valeur cible selon une manière prescrite respective et dans le cas dans lequel ladite région spécifiée respective correspond à ladite valeur cible selon ladite manière prescrite respective pour chaque ligne d'instruction de champ dans une dite règle respective, pour appliquer l'instruction de traitement de chaque instruction de champ dans ladite règle correspondante en ce qui concerne la région spécifiée respective, ledit processeur étant **caractérisé en ce que**, dans le cas dans lequel aucune dite règle n'est trouvée en correspondance, il est en outre adapté pour réaliser une ou plusieurs actions qui sont constituées par :
l'émission d'un message d'alerte de sécurité ;
l'annulation de la transmission d'une certaine part du paquet de données ou de sa totalité ; et
la modification, l'ajout ou la suppression d'une règle.
